# EUROPEAN PATENT APPLICATION

(11) **EP 1 838 052 A1**
(43) Date of publication of application: **26.09.2007**
(21) Application number: 06290446.1
(22) Date of filing: 20.03.2006
(51) Int. Cl.: H04L 12/56, H04L 12/46

(54) **Method for composing a data stream, a unit therefor and a switch with such unit**

(71) Applicant: Alcatel Lucent, 75008 Paris (FR)
(72) Inventor: Lautenschläger, Wolfram, 74343 Sachsenheim (DE)
(74) Representative: Brose, Gerhard

(57) **Abstract**

The invention relates to a method for composing a data stream (OL) consisting of packets of equal length and being gathered in waiting queues (W1, W2, W3, W4, ..., WM), where data blocks in the waiting queues (W1, W2, W3, W4, ---, WM) are assigned parameters (wj) being characteristic for the duration of the building of a data packet, and where the parameters (wj) are taken into consideration when composing the data stream (OL), as well as to a unit (FAU) therefor and to a switch with such unit.

## Description

The invention relates to a method for composing a data stream consisting of packets of equal length and being gathered in a waiting queue, according to the preamble of claim 1, a unit for building a data stream consisting of packets of equal length, the unit including waiting queues, according to the preamble of claim 2, and a switch for switching data packets of equal length, according to the preamble of claim 3.

The move from circuit switching to packet switching is mainly because of the higher flexibility of the latter. Packet switching, due to its nature of a store-and-forward approach, introduces an additional delay, which is dependent on the packet size. By this reason the packet size in operational networks is rather small. On the other hand, in core networks at high data rates, the packeting delay is even today much below the unavoidable propagation delay on fibers and it decreases further. In consequence, a reasonable gain from the small packet size cannot be earned anymore, but the switching overhead increases further with the increase of line rates.

A well-established idea to overcome this dependence is the aggregation of traffic at the border of core networks into larger packets, so called containers. This technique is known as Frame Switching.

Main features of Frame Switching are:
1. Client traffic is packed into equally sized containers by means of a Frame Aggregation Unit (FAU), each container carrying traffic of one single traffic class.
2. Frames are carried throughout the network as indivisible entities. Intermediate re-assembly of containers is regarded as to be outside of the frame-switching network, resulting in multi-hops.
3. On transport links between nodes the frames are transmitted as a continuous and synchronous bit-stream without any inter-frame gap. The ITU G. 709 transmission standard could serve as an appropriate candidate.
4. Inside the switching node the frames are separated from each other and forwarded individually.

The frame switched network is self-contained in a sense that frame switching core nodes communicate only to other frame switching core nodes. The interface to the rest of the net world at the edge establishes the Frame Aggregation Units that are attached to frame switches. An FAU receives client traffic, encapsulates it into frames, forwards the frames to the core of the frame switched network, and, normally, vice versa.

For better understanding some exemplary assumptions: The transport links operate at the actually highest available data rates of 10-40 Gbit/s, while the client interfaces are at least not higher rate, typically lower, e.g. Gigabit Ethernet. The frame size is, if taking the ITU G.709 standard as a basis, in the range of 16 kByte, which is roughly 10 times the largest Ethernet frame.

In a Frame Aggregation Unit the payload traffic undergoes two delays:
1. Incoming traffic has to wait in a frame assembly stage until a container is filled up. This time depends on the actual data rate of this particular traffic class. Lower data rates result in larger assembly delay and vice versa.
2. In a transmit buffer the container has to wait for transmission capacity. This time depends on the actual completion process of all other traffic classes. Let's call this a queuing delay.

In known implementations both delays are independent of each other and sum up to a total delay. A long assembly delay from the first step could encounter a long queuing delay in the second step.

The problem underlying the subject invention is thus to avoid unnecessary additions of delays.

This problem is solved according to the invention by a method for composing a data stream consisting of packets of equal length and being gathered in a waiting queue, according to the teaching of claim 1, a unit for building a data stream consisting of packets of equal length, according to the teaching of claim 2, and a switch for switching data packets of equal length, according to the teaching of claim 3.

The invention is based on the idea of building the output data stream of such Frame Aggregation Unit in such a manner, that the overall delay of the output packets is kept minimum.

Further embodiments are to be found in the subclaims and in the following description.

In the following the invention will be described with the aid of the drawings:
Figure 1 shows a unit for building a data stream, according to the invention.
Figure 2 shows a switch for switching data packets, according to the invention.

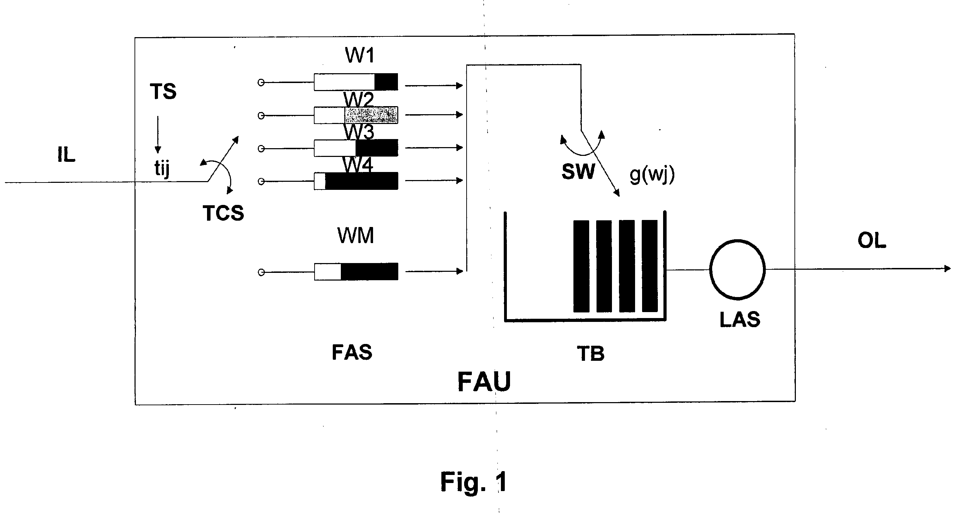

Based on figure 1 first the underlying circumstances are described:
Figure 1 shows a frame aggregation unit FAU with an input link IL and an output link OL.

The frame aggregation unit FAU includes a traffic classification stage TCS, a frame assembly stage FAS, a switch SW, a transmit buffer TB, and a link assembly stage LAS. The traffic within the frame aggregation unit FAU from the input link IL to the output link OL follows this order.

The traffic incoming as separate data blocks on the input link IL is distributed onto a number of waiting queues W1, W2, W3, W4, ..., WM. The criteria for this classification can be different. Mostly the destination will be at least one of the criteria. Another criterion may be the quality of service class QoS. Also urgency could be such criterion.

Whenever one of this waiting queues is full, or considered to be full, the contents is given as new data packet or frame into the transmit buffer TB. The link assembly stage LAS then builds the output data stream out of this frames. If there is no frame waiting, the link assembly stage LAS inserts an empty frame.

Up to here a conventional frame aggregation unit was described.

Now at the input of the frame aggregation unit FAU data blocks entering from the input link IL are assigned a time stamp TS each, containing the time of arrival tij. So each of the waiting queues W1, W2, W3, W4, ..., WM is assigned a weighting parameter w1, w2, w3, w4, ..., wM. Such parameter in the most general form is a function wj = f(tlj, ..., tNj). In a more specific case it is a simple list of the time stamps. In the most preferred case it is the time stamp representing the oldest data block in this queue. Always taking the time stamp representing the youngest data block in a queue would have the same effect as the prior art solution, where no time stamps are considered at all.

As described above, whenever one of this waiting queues in the frame assembly stage is full, or considered to be full, the contents is given as new data packet or frame into the transmit buffer TB. But now the switch SW makes sure, that the new frame is not simply put at the end of the queue, but entered such that the order of the waiting frames is given by the above mentioned weighting parameters w1, w2, w3, w4, ..., wM. Thus the switch SW operates according to a function g(wj).

Of course, the function of the switch SW could equally be fulfilled at the output of the transmit buffer BS. But one should be aware of the fact that the whole frame aggregation unit FAU in practice is nothing else but a number of software-driven memory places and the operation thereof depends only on how the control software is written.

In practice mostly such frame aggregation unit does not only have one input for one input link, but there are more than one such input links coming from more than one client terminal. All data blocks of all such input links are then classified by the traffic classification stage TCS and entered into the waiting queues Wj of the frame assembly stage. As the number of possible classes is the same for all input links, the same waiting queues Wj of the frame assembly stage are used and from here on the rest is the same as with only one input link.

In practice, too, there is not only the direction from client terminals to the core network, but also the direction from the core network to the client terminal. That means, that a frame aggregation unit also contains or is complemented by means for separating incoming frames or data packets into their data blocks and to distribute such data blocks to the respective receive parts of the clients' terminals.

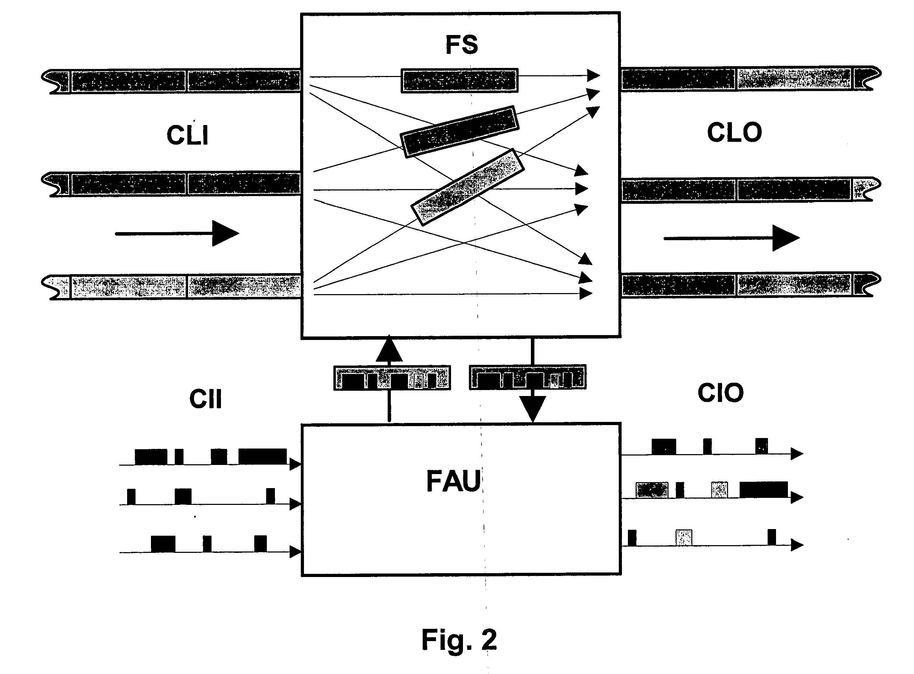

Coming now to figure 2, where we have such frame aggregation unit FAU with a number of client interface inputs CII and a number of client interface outputs CIO, a frame switch FS with core link inputs CLI and core link outputs CLO, and connections between the frame aggregation unit FAU and the frame switch FS in both directions.

The traffic on the core link inputs CLI and core link outputs CLO may be traffic according to the standard G.709. Such traffic within the frame switch is switched between the different core link inputs CLI and the core link outputs CLO on the basis of frames or data packets as described above. That means that any such frame contains traffic assigned to one and the same traffic class, but including data blocks originated from different terminals and destined for different terminals.

The traffic entering from one core link input CLI now is distributed frame by frame onto either one of the core link outputs CLO or towards the frame aggregation unit FAU. The traffic incoming from the frame aggregation unit FAU similarly is distributed frame by frame onto one of the core link outputs CLO.

## Claims

1. Method for composing a data stream (OL) consisting of packets of equal length and being gathered in waiting queues (W1, W2, W3, W4, ..., WM), **characterized in, that** data blocks in the waiting queues (W1, W2, W3, W4, ..., WM) are assigned parameters (wj) being characteristic for the duration of the building of a data packet, and that the parameters (wj) are taken into consideration when composing the data stream (OL).

2. Unit (FAU) for building a data stream (OL) consisting of packets of equal -length, -the unit (FAU) including waiting queues (W1, W2, W3, W4, ..., WM), **characterized in, that** the waiting queues (W1, W2, W3, W4, ..., WM) include space for storing parameters (wj) that are assigned to data blocks, that a selector (SW) is arranged at the input or at the output of the builder (TB) of the data stream (OL) and that the selector (SW) is built such that the parameters (wj) are taken into consideration when building the data stream.

3. Switch (Fig. 2) for switching data packets of equal length, including at least one input (CLI) for a data stream of data packets of equal length, at least one output (CLO) for a data stream of data packets of equal length, and at least one input (CII) for data blocks to be assembled into data packets of equal length, but different classification for being inserted into outgoing data streams, **characterized in, that** the switch includes a unit (FAU) according to claim 2 for assembling data blocks into data packets of equal length.

4. Method according to claim 1, **characterized in, that** the parameters are weighting functions.

5. Method according to claim 1, **characterized in, that** the parameters are time stamps (TS).

## Amended claims

### Amended claims in accordance with Rule 86(2) EPC.

**1.** Method for composing a data stream (OL) consisting of packets of equal length and being gathered in waiting queues (W1, W2, W3, W4, ..., WM), where data blocks in the waiting queues (W1, W2, W3, W4, ..., WM) are assigned parameters (wj) being characteristic for the duration of the building of a data packet, and where the parameters (wj) are taken into consideration when composing the data stream (OL),
**characterized in, that** the data stream is composed by using a transmit buffer (TB) buffering packets of equal length consisting of a number of data blocks each, and that the parameters (wj) are taken into consideration when composing the data stream (OL) in entering the packet such that the order of the waiting packets is given by the said parameters (wj).
